# EUROPEAN PATENT APPLICATION

(11) **EP 1 083 075 A1**
(43) Date of publication of application: **14.03.2001**
(21) Application number: 99307148.9
(22) Date of filing: 09.09.1999
(51) Int. Cl.: B60K 31/00

(54) **Motor vehicle braking with adaptive cruise control**

(71) Applicant: JAGUAR CARS LIMITED, Allesley Coventry CV5 9DR (GB)
(72) Inventor: Haney, Paul John, Rugby, Warwickshire CV22 6HZ (GB); Richardson, Michael Julian, Redditch, Worcestershire B97 4SG (GB); Blake, Ian Philip, Balsall Common, Coventry CV7 7PZ (GB)
(74) Representative: Messulam, Alec Moses

(57) **Abstract**

The present invention relates to the control of braking in a motor vehicle that has an automatic vehicle speed control system, and particularly an adaptive vehicle speed control system. The vehicle speed control system includes a cruise controller that can automatically apply (AB) the vehicle brakes when vehicle speed (V) sufficiently exceeds a target speed (TS), for example when separation between the vehicle and a leading vehicle becomes too small. If a driver then presses (DB) the brake pedal during application (AB) of the brakes by the vehicle speed control system, then the application (AB) of the brakes by the vehicle speed control system is not immediately deactivated, but is progressively deactivated. In this way a smooth hand-over is achieved between automatic braking (AB) and driver braking (DB).

## Description

The present invention relates to the control of braking in a motor vehicle that has an automatic vehicle speed control system, and particularly an adaptive vehicle speed control system.

In a conventional cruise control equipped motor vehicle, a vehicle speed control system maintains vehicle speed at or near a target speed, which may be set manually by a driver. The driver can cancel cruise control and take command of vehicle speed by pressing and holding, or by pressing and releasing, the brake pedal or, if the vehicle has a manual transmission, the clutch pedal. Control is then immediately restored to the driver.

Adaptive vehicle speed control systems are known which have a vehicle proximity sensor for sensing the distance to a vehicle travelling in front. If the separation between the travelling vehicles falls below a minimum following distance, then the adaptive cruise control will activate the brakes to reduce the vehicle speed to maintain separation with the vehicle in front. In this case, the target speed is automatically reduced by the vehicle speed control system. When vehicle separation increases, the target speed may be automatically increased to the original value, in which case the cruise control will cause the vehicle to accelerate to the new target speed.

A vehicle speed control system can also be arranged to activate the brakes if the vehicle is travelling down a steep enough slope to cause the vehicle speed to rise above the target speed.

Another circumstance in which the cruise control may activate brakes is if the driver manually reduces the target speed. The vehicle speed control system will then cause the vehicle to brake until the vehicle speed is reduced to the new target speed.

The inventors have discovered a problem with such vehicle speed control systems. If the cruise control is causing the vehicle to brake, and the driver touches the brakes, or clutch, either inadvertently or prior to taking manual control of vehicle speed, then the cruise control is released. The driver then senses a sudden change in vehicle movement opposite to that he may have been expecting. This is disconcerting to a driver, and could in an extreme situation be dangerous owing to an unexpected loss of braking effort.

It is an object of the invention to provide a motor vehicle with a more convenient vehicle speed control system.

Accordingly, the invention provides a motor vehicle with a vehicle speed control system, comprising a cruise controller which when activated controls vehicle speed according to a target speed, a vehicle speed sensor that generates a signal representative of vehicle speed, an engine demand controller for controlling engine power, and a vehicle braking system including a driver brake pedal that controls a brake actuator for applying vehicle brakes, and a brake pedal actuation sensor system that generates a brake pedal activation signal according to whether or not a driver is pressing the brake pedal, in which the vehicle speed control system:
a) is operable when the cruise controller is activated to control automatically both the engine demand controller and the brake actuator;
b) receives the vehicle speed signal and the brake pedal activation signal;
c) compares the vehicle speed signal with the target speed;
d) automatically controls the engine demand controller to maintain the vehicle speed at the target speed;
e) automatically applies the brakes to reduce the vehicle speed to the target speed if the vehicle speed sufficiently exceeds the target speed; and
f) monitors the brake pedal activation signal in order to deactivate the cruise controller when the driver presses the brake pedal;
characterised in that if the driver presses the brake pedal during application of the brakes by the vehicle speed control system, then the application of the brakes by the vehicle speed control system is not immediately deactivated, but is progressively deactivated.

The brake actuator may include a conventional vacuum servo actuator in a power-assisted braking system. The vehicle speed control system may then comprise a relatively small motor, which activates the servo in a similar manner to the brake pedal.

The vehicle speed control system may have a conventional switching arrangement by which a driver may set, reset and cancel cruise control. If the driver uses the reset function to reduce the target speed, then the brakes may gently slow the vehicle to the new reduced target speed.

If the driver sees that more than gentle braking is needed to reduce the vehicle's speed, then he may apply the brakes directly. A brake pedal normally provides some resistance to applied pressure, so that the driver has to press with some minimum force before the brake pedal beings to move and actuate the brakes. Because a conventional brake pedal translates movement of the brake pedal into a braking force, a driver may not activate the brake the moment his foot lightly touches the brake pedal. Because the vehicle speed control system is progressively deactivated, the gentle braking is not immediately cancelled, giving time for the driver to apply more fully the brakes.

Because of this delay, it is not necessary for a driver to quickly press and move the brake pedal to match the braking provided by the vehicle speed control system.

The progressive deactivation of the cruise control braking may begin as soon as the driver presses on the brake pedal with some minimum force. Therefore, the brake pedal actuation sensor system may be a pressure, rather than a movement sensor. This also permits an arrangement whereby the vehicle speed control system is immediately deactivated whenever the driver taps or momentarily presses the brake pedal.

It is particularly advantageous if, when application of the brakes by the vehicle speed control system is being progressively deactivated, the vehicle is braked at a rate corresponding to the quicker of the rates corresponding to that of either the brake pedal or the vehicle speed control system. This then permits a smooth hand-over between cruise control braking and driver braking. Furthermore, the vehicle speed control system may be immediately deactivated as soon as the vehicle is braked at a rate corresponding to that of the brake pedal. This prevents unexpected braking after the driver has taken affective full control of the braking from the vehicle speed control system.

If the vehicle has a manual or a semi-automatic transmission, then a gear change sensor system may be provided that generates a gear change activation signal according to whether or not a driver is changing gear. The vehicle speed control system can then receive the gear change activation signal and monitor the gear change activation signal in order to deactivate the cruise control when the driver activates a gear change. If, during application of the brakes by the vehicle speed control system, the driver acts to change gear, for example by pressing a clutch pedal or moving a gear selector, the application of the brakes by the vehicle speed control system is not immediately deactivated, but is progressively deactivated.

When the vehicle has a driver clutch pedal, the gear change activation signal may be a clutch pedal activation signal generated according to whether or not a driver is pressing the clutch pedal. In this case, the vehicle speed control system can be immediately deactivated whenever the driver momentarily presses the clutch pedal.

The invention is particularly useful when the vehicle comprises a vehicle separation sensor system for sensing the separation of the vehicle from a leading vehicle and that generates a signal representative of vehicle separation. The vehicle speed control system can then be an adaptive vehicle speed control system that receives the vehicle separation signal and that reduces the target speed if the vehicle separation decreases in order to brake the vehicle to maintain a minimum vehicle separation.

In the case where a driver presses an accelerator pedal in order to increase engine power, an accelerator pedal actuation sensor system may be provided that generates an accelerator pedal activation signal according to whether or not a driver is pressing the accelerator pedal. The vehicle speed control system can then receive the accelerator pedal activation signal and monitor the accelerator pedal activation signal so that if, during application of the brakes by the vehicle speed control system, the driver presses the accelerator pedal, then the application of the brakes by the vehicle speed control system is immediately deactivated.

The accelerator pedal will normally need to be pressed by at least a minimum amount before it begins to move and so control the engine. A driver may want rest his foot lightly on the pedal in anticipation of using the accelerator pedal. The accelerator pedal actuation sensor is therefore preferably a movement sensor that detects movement of the accelerator pedal from a rest position. The cruise control braking is then not cancelled until the driver acts to take control of engine power.

The deactivation period for the brakes described above should be at least as much as typical driver reaction times in pressing a brake pedal. For most drivers, this is about at least one-third of a second. The driver will expect the vehicle speed control system to behave as a conventional vehicle speed control system, so that if the driver has been pressing a brake, accelerator or clutch pedal for some relatively short time, then the driver will expect the cruise control to be cancelled. Therefore, the progressive deactivation should lead to complete deactivation within about 3 seconds. Ideally, the progressive deactivation of the brakes should take place over about 1 second.

Also according to the invention, there is provided a method of controlling the speed of a motor vehicle according to a target vehicle speed, the vehicle comprising a vehicle speed control system, a cruise controller, a vehicle speed sensor for generating a vehicle speed signal representative of actual vehicle speed, an engine demand controller for controlling engine power, and a vehicle braking system including a driver brake pedal that controls a brake actuator for applying vehicle brakes, and a brake pedal actuation sensor system for generating a brake pedal activation signal according to whether or not a driver is pressing the brake pedal, in which the vehicle speed control system is operable to control the engine demand controller and the brake actuator, the method comprising the steps of:
i) providing to the vehicle speed control system the target vehicle speed, the vehicle speed signal, and the brake pedal activation signal;
ii) activating the cruise controller to control vehicle speed at the target speed according to a difference between the target vehicle speed and actual vehicle speed;
iii) using the vehicle speed control system to apply automatically the brakes to reduce the vehicle speed to the target speed if the vehicle speed sufficiently exceeds the target speed; and
iv) deactivating the cruise controller when the driver presses the brake pedal; characterised in that
v) if the driver presses the brake pedal during application of the brakes by the vehicle speed control system, then the application of the brakes by the vehicle speed control system is not immediately deactivated, but is progressively deactivated.

The invention will now be described by way of example, with reference to the accompanying drawings, in which:
Figure 1 is a schematic drawing of a motor vehicle with a vehicle speed control system according to the invention; and
Figure 2, 3, 4 and 5 are time-line plots for a vehicle speed control system according to the invention, showing vehicle target vehicle speed, together with automatic braking and driver braking.

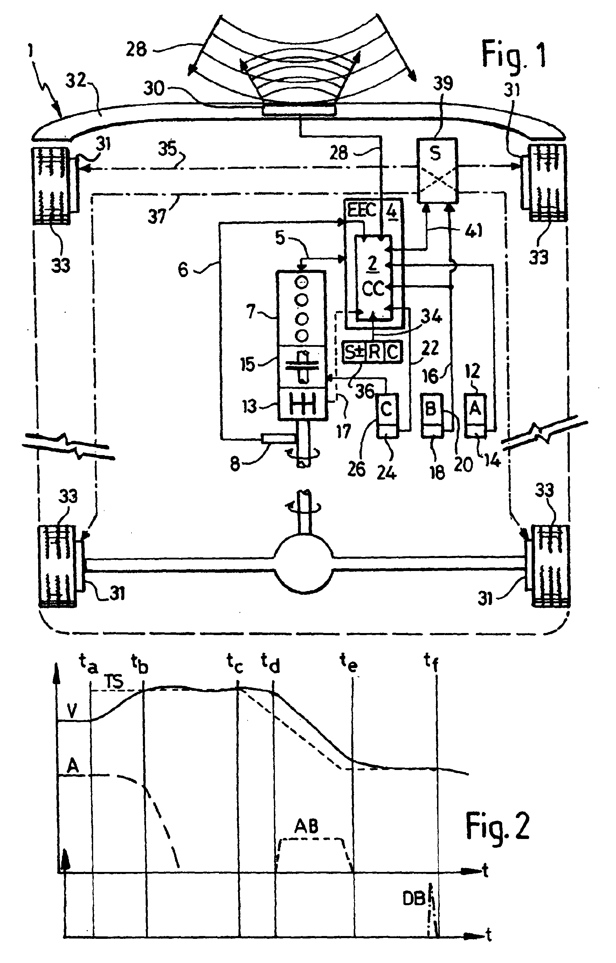

Figure 1 shows a motor vehicle 1 in dashed outline with a vehicle speed control system having cruise controller (CC) electronics 2 as part of an electronic engine control (EEC) unit 4 that exercises electronic control 5 over a reciprocating internal combustion engine 7. The EEC unit 4 receives a vehicle speed signal 6 from a crank shaft sensor 8, and a driver demand signal 10 from an accelerator pedal 12 which incorporates an accelerator pedal position sensor 14. Both the vehicle speed signal 6 and driver demand signal 10 are passed to the cruise control electronics 2, together with: a driver braking signal 16 from a brake pressure sensor 18 on a brake pedal 20; a clutch activation signal 22 from a clutch pressure sensor 24 on a clutch pedal 26; a vehicle proximity signal 28 from a radar transmitter 30 in a front bumper 32; and a number of cruise control setting signals 34 from a conventional arrangement of driver cruise control switches 36.

Optionally, the vehicle may not have a manual transmission 13, and a clutch 15, but an automatic transmission (not shown). Alternatively, the transmission may be semi-automatic, that is with an automatically operable clutch 15, in which case the cruise control electronics 2 may receive a gear shift signal 17, when the driver is about to change gear.

The vehicle 1 has a conventional braking arrangement with a disc brake 31 on each of four wheels 33 controlled through diagonally separate brake line circuits 35,37 by a brake actuator 39 that includes vacuum brake servo and a tandem master cylinder for the twin brake circuits 35,37. The brake actuator 39 has an internal motorised actuator (not shown) that receives the brake pedal pressure signal 16 and a separate brake activation signal 41 from the cruise control electronics 2. The brake actuator 39 operates according to one or the other of the brake signals 16,41 - whichever is indicative of the greatest level of braking.

When a driver sets a target cruise speed with the cruise control switches 36, when his foot is off the brake and clutch pedals 20,26, the cruise control electronics 2 are activated to control the vehicle speed through the EEC unit 2 according to a difference between the target speed and the detected vehicle speed signal 6. If the vehicle speeds up or slows down this will be detected by the vehicle speed sensor 8, and the cruise control 2 will either make the EEC unit 4 demand more or less power from the engine 7. If the vehicle speed is sufficiently above the target speed, for example more than 5 km/h, then the cruise control electronics 2 will demand gentle braking from the brake actuator 39 until the vehicle speed has dropped sufficiently.

Whether or not the cruise control is activated, if a driver presses the accelerator pedal 12, the driver demand signal 10 will cause the EEC unit 4 to make the vehicle 1 speed up by increasing engine power demand signals 5. If the cruise control 2 is on, then this remains on as long as the driver does not touch the brake or clutch pedals 20,24. When the driver releases his foot from the accelerator pedal 12, the vehicle 1 will slow down to the originally set target speed. The accelerator pedal sensor 14 is therefore a movement, rather than a pressure sensor.

The brake pedal sensor 18 and clutch pedal sensor 24 are, however, pressure sensors. If the driver momentarily presses and releases the brake pedal 20 or clutch pedal 26, then the cruise control 2 is immediately deactivated.

If however, the brake pedal 20 is pressed and held while the cruise control 2 is demanding braking from the brake actuator 39, then the cruise control braking is not immediately deactivated but is progressively deactivated so that there is not a sudden loss of braking effort in the case that the pressure exerted by the driver on the brake pedal 20 is insufficient to match the braking that is demanded by the cruise controller 2.

Figures 2, 3, 4 and 5 show time-line plots explaining this. In these plots, which show various values plotted against time (t), the lower portion of the graph relates to driver braking (DB). The driver must press with some minimum force before the brakes 31 become effective. In the figures, this minimum force coincides with the upper time axis.

In Figure 2, the vehicle 1 is initially travelling at a steady velocity (V) at an accelerator pedal setting (A). At time tₐ, the driver sets the cruise controller 2 on at a higher target speed (TS), and releases his foot from the accelerator pedal 12. At time t_{b} the vehicle has reached the higher target speed TS, and remains at this speed until time t_{c}. At time t_{c}, the target speed TS drops steadily. This could be because the driver is reducing the cruise speed manually with the cruise setting controls 36, or because the vehicle proximity radar unit 30 is indicating a decrease below a minimum acceptable separation with a vehicle in front.

At time t_{c}, the vehicle speed starts to drop as the engine power demand is dropped to a minimum idle value. The vehicle speed V does not drop as quickly as the target speed TS, with the result that when the vehicle speed V is sufficiently above (e.g. 5 km/h above) the target speed T at time t_{d}, the cruise controller 2 automatically demands braking (AB). Once the vehicle speed V has been reduced to a level close to the target speed TS the automatic braking AB tapers off at time tₑ. The cruise controller 2 then steadies the vehicle speed at a reduced target speed TS until the driver momentarily taps the brake pedal at t_{f}, which deactivates the cruise controller 2. Alternatively, if the driver had momentarily tapped the clutch pedal 26, the cruise controller 2 would have been immediately deactivated.

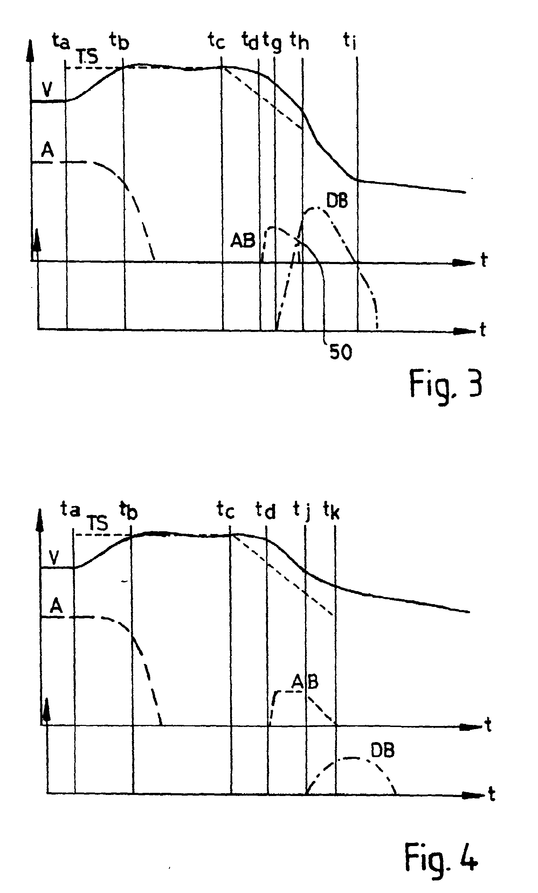

In Figure 3 the operation of the cruise controller is the same as Figure 2 until a time t_{g}, shortly after time t_{d}, at which the driver begins to press (DB) and hold the brake pedal 20 in order to slow the vehicle speed more rapidly than the automatic braking. Initially, the sustained pressure on the brake pedal 20 is insufficient to activate the brakes 31. However, as soon as the brake pedal is pressed, the automatic braking AB begins to drop steadily in a progressive deactivation of cruise control braking. The driver braking starts to take effect only when the driver braking DB crosses the automatic braking AB at point indicated by reference numeral 50. The cruise controller 2 is then immediately deactivated at time tₕ. The vehicle continues to slow under driver braking DB until time tᵢ, after which the vehicle coasts at a steadily dropping speed.

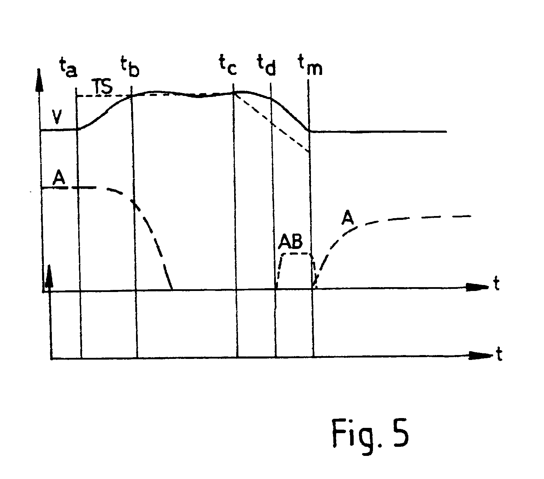

Figure 4 shows a braking situation intermediate that of Figure 2 and 3. Again, the plot is similar to Figures 2 and 3 until a time tⱼ after time t_{d} at which point the driver touches DB and holds the brake pedal 2 but not heavily enough to activate the brakes 31. The automatic braking AB is then steadily reduced by the cruise controller 2 over a period of one second, until at time tₖ the cruise controller 2 is fully deactivated. Thereafter, the vehicle coasts slower.

During the times between t_{g} and tₕ, and between tⱼ and tₖ, the driver experiences a gradual lessening of braking effort. This avoids a sudden loss of braking effort which can give the driver an odd sensation that the vehicle feels to be moving more quickly even though his foot has just pressed the accelerator pedal 20.

Figure 5 is again similar to the preceding plots up to time t_{d}, after which during automatic braking AB by the cruise controller 2, the driver presses the accelerator pedal 12 at time tₘ. This immediately causes the cruise control 2 to become deactivated. If, however, the accelerator 12 had been pressed when the cruise control 2 was active but not automatically applying the brakes 31, the cruise control 2 would not have been deactivated.

The invention therefore provides a vehicle speed control system with automatic cruise control braking, which responds under driver braking in a way which avoids a sudden and unexpected loss of braking effort.

## Claims

1. A motor vehicle (1) with a vehicle speed control system, comprising a cruise controller (2) which when activated controls vehicle speed (V) according to a target vehicle speed (TS), a vehicle speed sensor (8) that generates a signal (6) representative of vehicle speed (V), an engine demand controller (4) for controlling engine power, and a vehicle braking system (20,31,33,39) including a driver brake pedal (20) that controls a brake actuator (39) for applying vehicle brakes (31), and a brake pedal actuation sensor system (18) that generates a brake pedal activation signal (16) according to whether or not a driver is pressing (DB) the brake pedal (20), in which the vehicle speed control system:
a) is operable when the cruise controller (2) is activated to control automatically both the engine demand controller (4) and the brake actuator (39);
b) receives the vehicle speed signal (6) and the brake pedal activation signal (16);
c) compares the vehicle speed signal (6) with the target vehicle speed (TS);
d) automatically controls (5) the engine demand controller (4) to maintain the vehicle speed (V) at the target vehicle speed (TS);
e) automatically applies (AB) the brakes (31) to reduce the vehicle speed (V) to the target vehicle speed (TS) if the vehicle speed (V) sufficiently exceeds the target vehicle speed (TS); and
f) monitors the brake pedal activation signal (16) in order to deactivate the cruise controller (2) when the driver presses the brake pedal (20);
characterised in that if the driver presses (DB) the brake pedal (20) during application (AB) of the brakes (31) by the vehicle speed control system, then the application (AB) of the brakes (31) by the vehicle speed control system is not immediately deactivated, but is progressively deactivated.

2. A motor vehicle (1) as claimed in Claim 1, in which the driver does not need to press (DB) the brake pedal so hard as to move the brake pedal (20) for the application (AB) of the brakes (31) by the vehicle speed control system to be deactivated progressively.

3. A motor vehicle (1) as claimed in Claim 1 or Claim 2, in which the vehicle speed control system is immediately deactivated whenever the driver momentarily presses (DB) the brake pedal (20).

4. A motor vehicle (1) as claimed in any preceding claim, in which, when application (AB) of the brakes (31) by the vehicle speed control system is being progressively deactivated, the vehicle (1) is braked at a rate corresponding to the quicker of the rates corresponding to that of either the brake pedal (20) or the vehicle speed control system.

5. A motor vehicle (1) as claimed in Claim 4, in which the vehicle speed control system is immediately deactivated as soon as the vehicle (1) is braked at a rate corresponding to that of the brake pedal (20).

6. A motor vehicle (1) as claimed in any preceding claim, comprising, a manual or a semi-automatic transmission (13), and then a gear change sensor system (24) that generates a gear change activation signal (17,22) according to whether or not a driver is changing gear, the vehicle speed control system receiving the gear change activation signal (17,22) and monitoring the gear change activation signal (17,22) in order to deactivate the vehicle speed control system when the driver activates a gear change, so that if, during application (AB) of the brakes (31) by the vehicle speed control system, the driver acts to change gear, then the application (AB) of the brakes (31) by the vehicle speed control system is not immediately deactivated, but is progressively deactivated.

7. A motor vehicle (1) as claimed in Claim 6, comprising a driver clutch pedal (26), in which the gear change activation signal is a clutch pedal activation signal (22) generated according to whether or not a driver is pressing the clutch pedal (26), in which the vehicle speed control system is immediately deactivated whenever the driver momentarily presses the clutch pedal (26).

8. A motor vehicle (1) as claimed in any preceding claim, comprising a vehicle separation sensor system (30) for sensing the separation of the vehicle (1) from a leading vehicle and that generates a signal (28) representative of vehicle separation, the vehicle speed control system being an adaptive vehicle speed control system which receives the vehicle separation signal and reduces the target vehicle speed (TS) if the vehicle separation decreases, in order brake the vehicle (1) to maintain a minimum vehicle separation.

9. A motor vehicle (1) as claimed in any preceding claim, comprising a driver accelerator pedal (12) for controlling engine power, and an accelerator pedal actuation sensor system (14) that generates an accelerator pedal activation signal (10) according to whether or not a driver is pressing the accelerator pedal (12), in which the vehicle speed control system receives the accelerator pedal activation signal (10) and monitors the accelerator pedal activation signal (10) so that if, during application (AB) of the brakes (31) by the vehicle speed control system, the driver presses (DB) the accelerator pedal (12), then the application (AB) of the brakes (31) by the vehicle speed control system is immediately deactivated.

10. A motor vehicle (1) as claimed in Claim 9, in which the accelerator pedal actuation sensor is a movement sensor (14) that detects movement of the accelerator pedal (12) from a rest position.

11. A motor vehicle (1) as claimed in any preceding claim, in which the progressive deactivation of the brakes takes place over at least about 1 second.

12. A method of controlling the speed of a motor vehicle (1) according to a target vehicle speed (TS), the vehicle (1) comprising a vehicle speed control system, a cruise controller (2), a vehicle speed sensor (8) for generating a vehicle speed signal (6) representative of actual vehicle speed (V), an engine demand controller (4) for controlling (5) engine power, and a vehicle braking system including a driver brake pedal (20) that controls a brake actuator (39) for applying vehicle brakes (31), and a brake pedal actuation sensor system (18) for generating a brake pedal activation signal (16) according to whether or not a driver is pressing (DB) the brake pedal (20), in which the vehicle speed control system is operable to control the engine demand controller (4) and the brake actuator (39), the method comprising the steps of:
i) providing to the vehicle speed control system the target vehicle speed (TS), the vehicle speed signal (6), and the brake pedal activation signal (16);
ii) activating the cruise controller (2) to control vehicle speed (V) at the target vehicle speed (TS) according to a difference between the target vehicle speed (TS) and actual vehicle speed (V);
iii) using the vehicle speed control system to apply automatically the brakes to reduce the vehicle speed (V) to the target vehicle speed (TS) if the vehicle speed (V) sufficiently exceeds the target vehicle speed (TS); and
iv) deactivating the cruise controller (2) when the driver presses (DB) the brake pedal (20); characterised in that
v) if the driver presses (DB) the brake pedal (20) during application (AB) of the brakes (31) by the vehicle speed control system, then the application (AB) of the brakes (31) by the vehicle speed control system is not immediately deactivated, but is progressively deactivated.
